# EUROPÄISCHE PATENTANMELDUNG

(11) **EP 1 950 078 A2**
(43) Veröffentlichungstag der Anmeldung: **30.07.2008**
(21) Anmeldenummer: 08000052.4
(22) Anmeldetag: 03.01.2008
(51) Int. Cl.: B60N 2/06, B60N 2/07, B60N 2/14

(54) **Verfahrvorrichtung zum Herausbewegen eines Sitzes aus einem Kfz-Innenraum, Sitzeinrichtung und KFZ mit einer Verfahrvorrichtung**

(30) Priorität: 23.01.2007 DE 102007003286
(71) Anmelder: GM Global Technology Operations, Inc., Detroit, MI 48265-300 (US)
(72) Erfinder: Bednarek, Georg, 64285 Darmstadt (DE); Heldmann, Olaf, 64572 Büttelborn (DE)
(74) Vertreter: Strauss, Peter

(57) **Zusammenfassung**

Der Gegenstand der vorliegenden Erfindung betrifft eine Verfahrvorrichtung (1) zum Herausbewegen zumindest eines Teils eines in eine Längsrichtung (L) ausgerichteten Sitzes (9), insbesondere eines Rücksitzes, aus einem durch eine Karosserie umgebenen Innenraum eines Kraftfahrzeugs, mit einer Einrichtung (2) zur Bewegung zumindest des Teils des Sitzes aus dem Innenraum, wobei die Einrichtung (2) einen quer zu der Längsrichtung (L) linear verfahrbaren Bewegungsmechanismus (3) umfasst. Der Gegenstand der Erfindung betrifft weiter eine Sitzeinrichtung und ein Kraftfahrzeug mit einer erfindungsgemäßen Verfahreinrichtung.

## Beschreibung

Die Erfindung betrifft eine Verfahrvorrichtung zum Herausbewegen zumindest eines Teils eines Sitzes aus einem Innenraum eines Kraftfahrzeugs gemäß dem Oberbegriff des Anspruchs 1. Weiter betrifft die Erfindung eine Sitzeinrichtung mit einem Kraftfahrzeugsitz und einer Verfahrvorrichtung. Darüber hinaus betrifft die Erfindung ein Kraftfahrzeug mit einer Sitzeinrichtung.

Bekannt sind Bewegungsvorrichtungen, mit denen sich Kraftfahrzeugsitze aus einem Innenraum eines Kraftfahrzeugs zumindest teilweise herausbewegen lassen.

Aus der DE 101 20 769 ist eine Schwenksitzanordnung für ein Fahrzeug bekannt, mit einem Grundgestell und einem in einem Drehlager des Grundgestells schwenkbar gelagerten Sitzgestell zur Aufnahme des Sitzes, sowie mit einem Antrieb zum Schwenken des Sitzgestells relativ zu dem Grundgestell, wobei dem Antrieb ein Dämpfungsglied und/oder ein die Antriebsenergie zumindest teilweise speicherndes Speicherelement zugeordnet ist. Diese Schwenksitzanordnung ist nur für Vordersitze anwendbar und ermöglicht es nur einem minimalen Teil des Sitzes, aus dem Innenraum herausbewegt zu werden. Die Schwenksitzanordnung ist zudem sehr komplex und aufwendig aufgebaut.

Aus der DE 100 15 427 C1 ist eine Haltevorrichtung in Kraftfahrzeugen zur Befestigung eines Kindersitzes auf einem Fahrzeugsitz bekannt, wobei der Kindersitz im rückwärtigen unteren Bereich zwei voneinander beabstandete erste Haltemittel aufweist, die mit korrespondierenden zweiten Haltemitteln lösbar verbindbar sind, welche starr in die Tragstruktur des Fahrzeugsitzes oder direkt in das Fahrzeug-Chassis eingebunden sind, wobei die ersten und zweiten Haltemittel auf der Sitzaußenseite als Schwenkachse ausgebildet sind, um die der Kindersitz nach dem Lösen der ersten und zweiten Haltemittel auf der Sitzinnenseite aus seiner Gebrauchsstellung um ca. 90° in eine Ein- und Ausstiegsstellung schwenkbar ist. Diese Haltevorrichtung ist nur für Kindersitze anwendbar. Die Kindersitze lassen sich durch Verschwenken um eine Achse zu einem Großteil aus dem Innenraum herausbewegen. Die Vorrichtung ist jedoch sehr komplex aufgebaut und ein komplettes Herausbewegen aus dem Innenraum ist aufgrund der festen Drehachse innerhalb des Kraftfahrzeugs nicht möglich.

Aus der EP 0 343 026 B1 ist eine Sitzanordnung auf einem Fahrzeugboden bekannt, die sich hinter einem Vordersitz seitlich neben einer seitlichen Zutrittstür eines Fahrzeugs befindet, mit einem Sitzteil, der auf einer im Wesentlichen quadratischen Fußplatte, die bezüglich des Bodens beweglich ist, mit einer ersten Schwenkvorrichtung zum Schwenken um eine im Wesentlichen durch die Mitte des Sitzes verlaufende erste vertikale Drehachse versehen ist, wobei die Fußplatte eine zweite Schwenkvorrichtung zum Schwenken bezüglich des Bodens um eine zweite vertikale Drehachse, die bezüglich der ersten Achse exzentriert ist und in einem Abstand von der seitlichen Zutrittstür liegt, der im Wesentlichen gleich der Breite des Sitzes ist, aufweist. Die zweite Schwenkvorrichtung ist gleitend in einer gekrümmten Bodenschiene aufgenommen. Die erste Schwenkvorrichtung ist auf geraden Gleitschienen angebracht. Auch diese Lösung ermöglicht nur ein teilweises Herausbewegen des Sitzes aus dem Innenraum.

Alle Lösungen weisen den Nachteil auf, dass die Bewegung im Wesentlichen mittels Verschwenken bewirkt wird. Hierfür ist ein komplexer und aufwendiger Aufbau erforderlich. Insbesondere ist eine Montage des Sitzes aufwendig. Zusätzlich sind Verdrehsicherungen erforderlich. Auch lassen sich die Lösungen nicht für alle Kraftfahrzeugsitze anwenden.

Es ist daher die Aufgabe der vorliegenden Erfindung, eine Verfahrvorrichtung sowie eine Sitzeinrichtung und ein Kraftfahrzeug zu schaffen, bei denen ein Sitz mittels einer einfachen Anordnung aus einem Kraftfahrzeuginnenraum leicht bewegbar ist.

Die Aufgabe wird ausgehend von einer Verfahrvorrichtung gemäß dem Anspruch 1 in Verbindung mit dessen Merkmalen gelöst.

Weiterhin wird die Aufgabe von einer Sitzeinrichtung gemäß Anspruch 11 gelöst.

Auch wird die Aufgabe von einem Kraftfahrzeug gemäß Anspruch 15 gelöst.

Vorteilhafte Weiterbildungen der Erfindung sind in den abhängigen Ansprüchen angegeben.

Die Erfindung schließt die technische Lehre ein, dass bei einer Verfahrvorrichtung zum Herausbewegen zumindest eines Teils eines in eine Längsrichtung ausgerichteten Sitzes, insbesondere eines Rücksitzes, aus einem durch eine Karosserie umgebenen Innenraum eines Kraftfahrzeugs, mit einer Einrichtung zur Bewegung zumindest des Teils des Sitzes aus dem Innenraum, vorgesehen ist, dass die Einrichtung einen quer zur Längsrichtung linear verfahrbaren Bewegungsmechanismus umfasst. Der Sitz oder ein Teil des Sitzes ist somit von einer ersten, eingefahrenen Position, in welcher der Sitz komplett im Innenraum angeordnet ist, in eine zweite, ausgefahrene Position, in welcher er zumindest teilweise aus dem Innenraum hervorragt, bewegbar.

Der Sitz ist bevorzugt ein Kraftfahrzeugsitz. Als Längsausrichtung wird vorliegend eine Kraftfahrzeuglängsrichtung bezeichnet, also die Richtung einer Mittelachse des Kraftfahrzeugs von einer Kraftfahrzeugfront zu einem Kraftfahrzeugheck bzw. umgekehrt. Der Innenraum ist durch die Kraftfahrzeugkarosserie umgeben und wird durch diese im Wesentlichen festgelegt. Die Karosserie umfasst die Kraftfahrzeugtüren, welche zum Herausbewegen des Teils des Sitzes geöffnet sind. Die Grenzen des Innenraums sind durch die geöffneten Türen unverändert. Die Verfahrvorrichtung kann weiter Antriebsmittel umfassen, mit welchen der Bewegungsmechanismus antreibbar ist. So kann zum Beispiel ein Aktuator wie ein Servomotor, eine Pneumatik oder eine Hydraulik verwendet werden, um eine Bewegung des Bewegungsmechanismus zu bewirken. Zudem kann die Verfahrvorrichtung Steuermittel umfassen, um den Antrieb entsprechend anzusteuern. Es lassen sich beispielsweise verschiedene Sitzstellungen speichern und entsprechend ansteuern. Entsprechend können die Steuermittel Programme und dergleichen umfassen. Auch kann die Verfahrvorrichtung Rastmittel umfassen, um verschiedene Positionen zu sperren.

Die Verfahrvorrichtung umfasst eine Einrichtung zum zumindest teilweisen Herausbewegen des Sitzes aus dem Innenraum. Diese Einrichtung umfasst einen Bewegungsmechanismus. Dieser Bewegungsmechanismus ist verfahrbar, insbesondere linear verfahrbar. Linear verfahrbar bedeutet, dass der Bewegungsmechanismus entlang einer Linie verfahrbar ist. Die Linie kann dabei gebogen sein. Bevorzugt verläuft die Linie entlang einer Ebene, insbesondere einer planen Ebene. Weiter bevorzugt verläuft die Linie als ebene, gerade, d. h. ungekrümmte Linie.

In einer Ausführungsform ist der Bewegungsmechanismus im Wesentlichen verschwenkfrei und/oder verdrehfrei verfahrbar.

Der Bewegungsmechanismus ist quer zu der Längsrichtung, insbesondere in eine Querrichtung (Q), verfahrbar. Quer umfasst alle winkligen Abweichungen von der Längsrichtung. Bevorzugt ist der Bewegungsmechanismus parallel zu einem Kraftfahrzeugboden, d. h. entlang einer Kraftfahrzeugbodenebene verfahrbar.

Insbesondere ist der Bewegungsmechanismus um etwa 90° gedreht zu der Längsrichtung verfahrbar.

In einer bevorzugten Ausführungsform umfasst der Bewegungsmechanismus ein lineares Schienensystem, um den Teil des Sitzes quer zur Längsrichtung in eine lineare Richtung zu bewegen. Das Schienensystem kann eine Schiene oder mehrere Schienen umfassen. Bevorzugt umfasst das Schienensystem parallel zueinander beabstandete Schienenpaare. Die Schienenpaare können in unterschiedlichen Ebenen zueinander angeordnet sein. Mindestens ein Schienenpaar verläuft dabei in eine Richtung quer zu der Längsrichtung, bevorzugt um 90° zu der Längsrichtung versetzt, um eine Querbewegung des Bewegungsmechanismus zu realisieren.

Das Schienensystem umfasst mindestens einen Trägerschienenteil, um das Schienensystem zu befestigen. Das Befestigen erfolgt vorzugsweise an einer tragenden Struktur des Kraftfahrzeugs. Insbesondere kann der Trägerschienenteil an einem Kraftfahrzeugboden befestigt werden. Das Trägerschienenteil kann in Längsrichtung des Kraftfahrzeugs ausgebildet sein. Über das Trägerschienenteil ist das Schienensystem insbesondere crashfest oder crashsicher an dem Kraftfahrzeug angeordnet. Das Trägerschienenteil umfasst bevorzugt zwei parallel zueinander beabstandete lineare Trägerschienen, kann aber auch eine Trägerschiene oder mehrere Trägerschienen umfassen. Die Trägerschienen sind über geeignete Verbindungsmittel mit einem Teil der tragenden Struktur des Kraftfahrzeugs verbindbar.

Das Schienensystem umfasst weiter einen relativ zu dem Trägerschienenteil verfahrbaren, linear geführt angeordneten Verfahrschienenteil. Der Verfahrschienenteil weist zu den Trägerschienen des Trägerschienenteils korrespondierende Verfahrschienen auf. Der Verfahrschienenteil ist relativ zu dem Trägerschienenteil verfahrbar. Es kann der gesamte Verfahrschienenteil oder nur ein Teil des Verfahrschienenteils bewegbar zu dem Trägerschienenteil ausgebildet sein. Wenn das Trägerschienenteil im Wesentlichen in Längsrichtung ausgerichtet ist, dann ist zumindest ein Teil des Verfahrschienenteils quer zu der Längsrichtung ausgebildet, um eine Bewegungsrichtung quer zu der Längsrichtung zu ermöglichen. Bevorzugt weist das Verfahrschienenteil mindestens ein Verfahrschienenpaar auf, weiter bevorzugt mehrere Verfahrschienenpaare. Die Verfahrschienenpaare sind parallel zueinander beabstandet und liegen bevorzugt auf einer Ebene zueinander.

In einer Ausführungsform weist der Verfahrschienenteil einen ersten Verfahrschienenteil, insbesondere ein erstes Verfahrschienenpaar auf, welcher bzw. welches mit dem Trägerschienenteil, insbesondere dem Trägerschienenpaar verbunden ist. Dabei kann das erste Verfahrschienenpaar ortsfest mit dem Trägerschienenpaar verbunden sein. In einer anderen Weiterbildung ist das Verfahrschienenpaar bewegbar mit dem Trägerschienenpaar verbunden. Es können entsprechende Feststellmittel vorgesehen sein, um eine Relativbewegung der Verfahrschienen zu den Trägerschienen zu unterbinden. Um eine Querbewegung zu realisieren, weist der Verfahrschienenteil entsprechend einen zweiten Verfahrschienenteil, insbesondere ein zweites Verfahrschienenpaar auf. Dieses ist relativ bewegbar zu dem Trägerschienenteil und/oder dem ersten Verfahrschienenteil ausgebildet. Die korrespondierenden Schienenteile sind dabei gegenseitig geführt.

Gemäß einem vorteilhaften Ausführungsbeispiel umfasst der Verfahrschienenteil mindestens eine ausfahrbare Teleskopschieneneinheit. Die Teleskopschieneneinheit umfasst einen ersten Verfahrschienenteil und einen relativ dazu bewegbaren zweiten Verfahrschienenteil. Insbesondere umfasst die Teleskopschieneneinheit ein erstes Verfahrschienenpaar und ein bewegbar dazu angeordnetes zweites Verfahrschienenpaar. Das zweite Verfahrschienenpaar ist dabei von einer eingefahrenen Position in eine ausgefahrene Position relativ zu dem ersten Verfahrschienenpaar angeordnet. Der zweite Verfahrschienenteil der Teleskopschieneneinheit kann mehrere zueinander bewegbar ausgebildete Verfahrschienenteile, insbesondere Verfahrschienenpaare umfassen, die selbst wieder eine Teleskopschieneneinheit bilden. Dabei ist die Anzahl der so umfassten Teleskopschieneneinheiten unter Berücksichtigung der Stabilität und eines erforderlichen Verfahrweges auszuwählen.

Wie bereits ausgeführt, ist es bevorzugt, dass der Trägerschienenteil mindestens zwei parallel beabstandet angeordnete, lineare Trägerschienen, das heißt ein lineares Trägerschienenpaar, umfasst.

Entsprechend ist es bevorzugt, dass der Verfahrschienenteil mindestens zwei zu dem Trägerschienenteil korrespondierende, verfahrbare Verfahrschienen umfasst.

In einer Weiterbildung der Erfindung ist vorgesehen, dass der Bewegungsmechanismus weiter eine Aufnahmeeinheit zur Aufnahme zumindest des Teils des Sitzes aufweist. Die Aufnahmeeinheit ist an einem in einer oberen Position bezüglich einer von dem Kraftfahrzeugboden in Richtung Kraftfahrzeugdach aus verlaufenden Höhenrichtung befindlichen Teil des Bewegungsmechanismus angebracht. Bevorzugt ist die Aufnahmeeinheit an dem obersten Verfahrschienenteil angeordnet. Die Aufnahmeeinheit kann ortsfest an dem Verfahrschienenteil angeordnet sein. Alternativ kann die Aufnahmeeinheit bewegbar an dem Verfahrschienenteil ausgebildet sein. Dabei kann die Aufnahmeeinheit translatorisch und/oder rotatorisch bewegbar an dem Verfahrschienenteil ausgebildet sein. Die Aufnahmeeinheit ist ausgebildet, um einen Sitz, insbesondere einen Kraftfahrzeugsitz aufzunehmen. In einer besonderen Ausführungsform ist die Aufnahmeeinheit ausgebildet, um einen Kindersitz aufzunehmen. Die Aufnahmeeinheit kann so ausgebildet sein, dass diese sich nur in einer ausgefahrenen Position des Bewegungsmechanismus relativ zu dem Bewegungsmechanismus bewegen lässt.

In einer Weiterbildung der Erfindung ist vorgesehen, dass der Bewegungsmechanismus eine Hubeinrichtung aufweist, um den Teil des Sitzes in eine weitere Richtung, das heißt im Wesentlichen in die Höhenrichtung, zu bewegen. Die Hubeinrichtung kann zwischen einem Verfahrschienenteil und einem Trägerschienenteil oder innerhalb dieser Teile ausgebildet sein. Die Hubeinrichtung kann in einer Ausführungsform durch geneigt verlaufende Schienenteile ausgebildet sein, um zusätzlich zu einer ersten Verfahrrichtung noch eine Bewegung in eine Höhenrichtung zu realisieren. In einer Ausführungsform kann die Höheneinrichtung in die Aufnahmeeinheit integriert sein.

Wie bereits zuvor aufgeführt, kann die Aufnahmeeinheit verschwenkbar an dem Bewegungsmechanismus angeordnet sein. Dabei kann eine in die Aufnahmeeinheit integrierte Hubeinrichtung ebenfalls verschwenkbar ausgebildet sein.

Die Erfindung schließt weiter die technische Lehre ein, dass bei einer Sitzeinrichtung, insbesondere eine Kraftfahrzeugsitzeinrichtung, wie eine Rücksitzkraftfahrzeugsitzeinrichtung, mit einem Kraftfahrzeugsitz und einer erfindungsgemäßen Verfahrvorrichtung der Kraftfahrzeugsitz an der Verfahrvorrichtung aufgenommen ist. Auf diese Weise ist es möglich, einen Kraftfahrzeugsitz mittels der Verfahrvorrichtung zumindest teilweise aus dem Kraftfahrzeuginnenraum herauszubewegen. Die Bewegung erfolgt dabei auf eine im Wesentlichen translatorische Weise. Somit sind ein einfacher Aufbau und eine einfache Konstruktion gewährleistet.

Um einen sicheren Halt innerhalb des Kraftfahrzeugs zu gewährleisten ist vorgesehen, dass die Verfahrvorrichtung direkt an einem tragenden Teil oder einer tragenden Struktur des (Kraft-)Fahrzeugs angeordnet ist. Auf diese Weise ist eine crashsichere Anordnung gewährleistet.

In einer alternativen Ausführungsform ist vorgesehen, dass die Verfahrvorrichtung über einen Adapter indirekt über ein Teil des Kraftfahrzeugs mit diesem Verbunden ist. Dieser Adapter kann so ausgebildet sein, dass die Verfahrvorrichtung an einem bereits vorhandenen Kraftfahrzeugsitz oder einer vorhandenen Kraftfahrzeugsitzhalterung anbringbar ist. Somit lässt sich die Verfahrvorrichtung einfach nachrüsten. Zudem lässt sich so ein Kindersitz mittels der Verfahrvorrichtung auf einfache Weise auf oder an einem fest eingebauten Kraftfahrzeugsitz, insbesondere einem Kraftfahrzeugrücksitz anordnen.

Das Schienensystem ist so in dem Kraftfahrzeug ausgebildet, dass der Sitz quer, insbesondere linear quer, zu der Längsrichtung zumindest teilweise aus dem Kraftfahrzeug herausfahrbar ist.

Die Erfindung schließt weiter die technische Lehre ein, dass bei einem Kraftfahrzeug eine erfindungsgemäße Sitzeinrichtung vorgesehen ist. Um den Kraftfahrzeugsitz aus dem Innenraum herauszubewegen, muss eine entsprechende Kraftfahrzeugtür geöffnet werden. Üblicherweise werden die Kraftfahrzeugtüren durch Schwenken um einen in Kraftfahrzeugrichtung vorderen Bereich der Kraftfahrzeugtür geöffnet, so dass ein Öffnen bei Fahrt durch die Wirkung des Fahrtwindes erschwert ist. Beim Herausfahren des Sitzes kann der Sitzbereich oder der Zugang zu diesem durch eine Tür eingeschränkt sein. Für diesen Fall ist eine bewegbar ausgebildete Aufnahmeeinheit vorteilhaft. Es gibt auch viele Türen, die als Schiebetür ausgebildet oder nach hinten in Richtung des Kraftfahrzeughecks aufklappbar sind. Für Kraftfahrzeug mit derartig ausgebildeten Kraftfahrzeugtüren ist eine bewegbare Aufnahmeeinheit nicht erforderlich. Die Verfahrvorrichtung bietet eine einfache und wenig aufwendige Vorrichtung zum vereinfachten Zugang zu einem an der Verfahrvorrichtung angeordneten Sitz. Das Herausbewegen des Sitzes aus dem Innenraum bzw. das Hereinbewegen in den Innenraum dient insbesondere als Ein-/Ausstiegserleichterung.

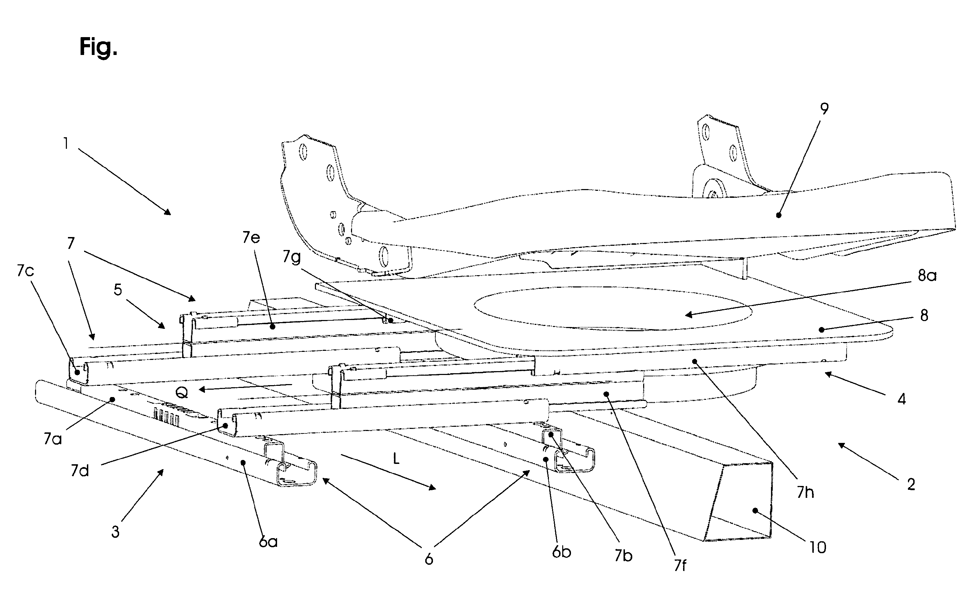

Weitere, die Erfindung verbessernde Maßnahmen sind in den Unteransprüchen angegeben oder ergeben sich aus der nachfolgenden Beschreibung von einem Ausführungsbeispiel der Erfindung, das in der einzigen Figur schematisch dargestellt ist. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

Die einzige Fig. zeigt eine perspektivische Ansicht einer Verfahrvorrichtung mit einem teilweise dargestellten Kraftfahrzeugsitz.

In der Fig. ist in perspektivischer Ansicht eine erfindungsgemäße Verfahrvorrichtung 1 dargestellt. Die Verfahrvorrichtung 1 umfasst eine Einrichtung 2, die einen Bewegungsmechanismus 3, eine Aufnahmeeinheit 4 und eine nicht dargestellte Hubeinrichtung umfasst. Der Bewegungsmechanismus 3 umfasst ein lineares Schienensystem 5 mit einem Trägerschienenteil 6 und einem Verfahrschienenteil 7.

Der Trägerschienenteil 6 umfasst vorliegend eine erste Trägerschiene 6a und eine zweite Trägerschiene 6b, die zusammen ein Trägerschienenpaar 6a - b bilden. Die Trägerschienen 6a, 6b sind als gerade verlaufende, lineare Trägerschienen im Wesentlichen gleich ausgebildet und sind in der Fig. als längliches Hohlprofil ausgeformt. Das Hohlprofil weist einen U-förmigen Querschnitt auf, wobei äußere Schenkelenden U-förmig nach innen in den von der U-Form definierten Raum gebogen sind. Diese bilden so einen hinterschnittartigen äußeren Bereich.

Der Verfahrschienenteil 7 umfasst mehrere Verfahrschienen 7a - 7h. Die Verfahrschienen 7a und 7b bilden ein erstes Verfahrschienenpaar 7a - b, die Verfahrschienen 7c und 7d ein zweites Verfahrschienenpaar 7c - d, die Verfahrschienen 7e und 7f ein drittes Verfahrschienenpaar 7e - f und die Verfahrschienen 7g und 7h ein viertes Verfahrschienenpaar 7g - h. Die Verfahrschienenpaare 7a - b, 7c - d, 7e - f, 7g - h weisen jeweils im Wesentlichen paarweise gleich ausgebildete Verfahrschienen 7a, 7b; 7c, 7d; 7e, 7f; 7g, 7h auf, die parallel gleich beabstandet zueinander ausgebildet sind.

Die Verfahrschienen 7a und 7b sind als längliches Hohlprofil mit einem U-förmigen Querschnitt ausgebildet, wobei die äußeren Schenkel der U-Form nach außen umgebogen sind, so dass der äußere Bereich ebenfalls eine U-Form aufweist. Die Verfahrschienen 7a und 7b korrespondieren zu den entsprechenden Trägerschienen 6a und 6b. Dabei sind die Verfahrschienen 7a, 7b so zu den Trägerschienen 6a, 6b angeordnet, dass die äußeren, gebogenen Enden der Verfahrschienen 7a, 7b hinter die äußeren, gebogenen Enden der Trägerschienen 6a, 6b greifen und die Verfahrschienen 7a, 7b so geführt bzw. teilweise in den Trägerschienen 6a, 6b angeordnet, genauer geführt, sind. Die Verfahrschienen 7a, 7b können so in eine Längsrichtung L bewegt werden. Dabei kann die Bewegung in Längsrichtung L durch entsprechende Feststellmittel (nicht dargestellt) unterbunden werden.

Die Trägerschienen 6a und 6b und die Verfahrschienen 7a und 7b sind in die Längsrichtung L ausgerichtet.

Quer zu dem ersten Verfahrschienenpaar 7a - 7b ist das zweite Verfahrschienenpaar 7c - 7d ausgerichtet. Das zweite Verfahrschienenpaar 7c - d ist verfahrbar zu dem ersten Verfahrschienenpaar 7a - b ausgebildet, so dass die Verfahrschienen 7c, 7d in eine Querrichtung Q bewegbar sind. Die Verfahrschienen 7c, 7d sind im Wesentlichen gleich ausgebildet und weisen in etwa die Form der Trägerschienen 6a, 6b auf.

Zusammen mit dem zweiten Verfahrschienenpaar 7c - d bilden das dritte Verfahrschienenpaar 7e - f und das vierte Verfahrschienenpaar 7g - h eine Teleskopschieneneinheit 7c - h. Das dritte Verfahrschienenpaar 7e - f weist die zwei Verfahrschienen 7e, 7f auf, welche ein Hohlprofilform mit einem im Wesentlichen Doppel-U-Querschnitt formen. Der Doppel-U-Querschnitt weist einen oberen U-Querschnitt und einen daran angeordneten unteren U-Querschnitt auf, so dass der Doppel-U-Querschnitt auch als H-Querschnitt bezeichnet werden kann. Der obere und/oder der untere U-Querschnitt sind dabei etwa wie der U-Querschnitt der ersten bzw. der zweiten Verfahrschiene 7a, 7b ausgebildet, das heißt als U-Querschnitt mit eine U-förmigen Biegung an den äußeren Enden ausgebildet. Mit diesen äußeren, nach außen zu einer U-Form gebogenen Enden hintergreifen die Verfahrschienen 7e, 7f den äußeren, nach innen gebogenen U-förmigen Bereich der Verfahrschienen 7c, 7d. Somit sind die Verfahrschienen 7e, 7f in den Verfahrschienen 7c, 7d gleitbar geführt.

Die Verfahrschienen 7e, 7f wirken weiter mit den korrespondierenden Verfahrschienen 7g, 7h zusammen. Die Verfahrschienen 7g, 7h weisen etwa die gleiche Form auf, wie die Trägerschienen 6a, 6b bzw. die Verfahrschienen 7c, 7d. Entsprechend greifen die äußeren, nach innen gebogenen U-förmigen Bereiche hinter die nach außen gebogenen, äußeren U-förmigen Bereiche der Verfahrschienen 7e, 7g ein, so dass die Verfahrschienen 7g, 7h gleitbar in den Verfahrschienen 7e, 7f geführt sind.

An den Verfahrschienen 7g, 7h ist die Aufnahmeeinheit 4 angeordnet. Die Aufnahmeeinheit 4 ist dabei als eine Aufnahmeplatte 8 mit einem im Wesentlichen rechteckigen Querschnitt ausgebildet. Dabei ist die Aufnahmeeinheit 4 mit den beiden Verfahrschienen 7g, 7h fest verbunden, so dass diese die Bewegung der Verfahrschienen 7g, 7h mit ausführt.

An der Aufnahmeeinheit 4 ist ein Sitz 9 aufgenommen. Der Sitz 9 ist hier nur ausschnittsweise schemenhaft dargestellt. Bei dem Sitz 9 kann es sich um einen Kraftfahrzeugrücksitz, einen Kindersitz oder dergleichen handeln. Die Aufnahmeeinheit 4 weist etwa zentrisch eine kreisförmige Ausnehmung 8a auf, in welcher der Sitz beispielsweise drehbar gelagert sein kann.

Weiter ist in der Fig. eine Schweller 10 dargestellt, der einen Teil der selbsttragenden Karosserie repräsentiert. Der Schweller 10 befindet sich unterhalb eines Türeinstiegs (hier nicht dargestellt), längs auf beiden Seiten des Fahrzeugs, zwischen den Radkästen vorn und hinten. Die Teleskopschieneneinheit 7c - h ist so angeordnet, dass sie zumindest teilweise über den Schweller 10 und somit aus dem Innenraum ausfahrbar ist.

### Bezugszeichenliste

- 1: Verfahrvorrichtung
- 2: Einrichtung
- 3: Bewegungsmechanismus
- 4: Aufnahmeeinheit
- 5: Schienensystem
- 6: Trägerschienenteil
- 6a - b: Trägerschienen
- 7: Verfahrschienenteil
- 7a - h: Trägerschiene
- 7a - b: erstes Trägerschienenpaar
- 7c - d: zweites Trägerschienenpaar
- 7e - f: drittes Trägerschienenpaar
- 7g - h: viertes Trägerschienenpaar
- 7c - h: Teleskopschieneneinheit
- 8: Aufnahmeplatte
- 8a: Ausnehmung
- 9: Sitz
- 10: Schweller

- L: Längsrichtung
- Q: Querrichtung

## Patentansprüche

1. Verfahrvorrichtung (1) zum Herausbewegen zumindest eines Teils eines in eine Längsrichtung (L) ausgerichteten Sitzes (9), insbesondere eines Rücksitzes, aus einem durch eine Karosserie umgebenen Innenraum eines Kraftfahrzeugs, mit einer Einrichtung (2) zur Bewegung zumindest des Teils des Sitzes aus dem Innenraum, **dadurch gekennzeichnet, dass** die Einrichtung (2) einen quer zu der Längsrichtung (L) linear verfahrbaren Bewegungsmechanismus (3) umfasst.

2. Verfahrvorrichtung (1) nach Anspruch 1, **dadurch gekennzeichnet, dass** der Bewegungsmechanismus (3) ein lineares Schienensystem (5) umfasst, um den Teil des Sitzes (9 quer zur Längsrichtung (L) in eine lineare Richtung, insbesondere eine Querrichtung (Q), zu bewegen.

3. Verfahrvorrichtung (1) nach Anspruch 1 oder 2, **dadurch gekennzeichnet, dass** das Schienensystem (5) einen Trägerschienenteil (6) umfasst, um das Schienensystem (5) zu befestigen.

4. Verfahrvorrichtung (1) nach einem der vorherigen Ansprüche 1 bis 3, **dadurch gekennzeichnet, dass** das Schienensystem (5) weiter einen relativ zu dem Trägerschienenteil (6) verfahrbaren, linear geführt angeordneten Verfahrschienenteil (7) umfasst.

5. Verfahrvorrichtung (1) nach einem der vorherigen Ansprüche 1 bis 4, **dadurch gekennzeichnet, dass** der Verfahrschienenteil (7) mindestens eine ausfahrbare Teleskopschieneneinheit (7c - h) umfasst.

6. Verfahrvorrichtung (1) nach einem der vorherigen Ansprüche 1 bis 5, **dadurch gekennzeichnet, dass** der Trägerschienenteil (6) mindestens zwei parallel beabstandet angeordnete lineare Trägerschienen (6a, 6b) umfasst.

7. Verfahrvorrichtung (1) nach einem der vorherigen Ansprüche 1 bis 6, **dadurch gekennzeichnet, dass** der Verfahrschienenteil (7) mindestens zwei zu dem Trägerschienenteil (6) korrespondierende, teleskopartig verfahrbare Verfahrschienen (7a, 7b; 7c, 7d; 7e, 7f; 7g, 7h) umfasst.

8. Verfahrvorrichtung (1) nach einem der vorherigen Ansprüche 1 bis 7, **dadurch gekennzeichnet, dass** die Einrichtung (2) weiter einen Aufnahmeeinheit (8) zur Aufnahme zumindest des Teils des Sitzes (9) aufweist.

9. Verfahrvorrichtung (1) nach einem der vorherigen Ansprüche 1 bis 8, **dadurch gekennzeichnet, dass** die Einrichtung (2) eine Hubeinrichtung aufweist, um den Teil des Sitzes (9) in eine weitere Richtung zu bewegen.

10. Verfahrvorrichtung (1) nach einem der vorherigen Ansprüche 1 bis 9, **dadurch gekennzeichnet, dass** die Aufnahmeeinheit (8) verschwenkbar an dem Bewegungsmechanismus (3) angeordnet ist.

11. Sitzeinrichtung, insbesondere eine Kraftfahrzeugsitzeinrichtung wie eine Rücksitzkraftfahrzeugsitzeinrichtung, mit einem Kraftfahrzeugsitz (9) und einer Verfahrvorrichtung (1) nach einem der vorherigen Ansprüche 1 bis 10, wobei der Kraftfahrzeugsitz (9) von der Verfahrvorrichtung (1) aufgenommen ist.

12. Sitzeinrichtung nach Anspruch 11, **dadurch gekennzeichnet, dass** die Verfahrvorrichtung (1) direkt an einem tragenden Teil des Fahrzeugs angeordnet ist.

13. Sitzeinrichtung nach einem der Ansprüche 11 oder 12, **dadurch gekennzeichnet, dass** die Verfahrvorrichtung (1) über einen Adapter indirekt über ein Teil des Kraftfahrzeugs mit diesem Verbunden ist.

14. Sitzeinrichtung nach einem der vorherigen Ansprüche 11 bis 13, **dadurch gekennzeichnet, dass** das Schienensystem (5) so in dem Kraftfahrzeug ausgebildet ist, dass der Kraftfahrzeugsitz (9) linear quer zu der Längsrichtung (L) zumindest teilweise aus dem Kraftfahrzeug herausfahrbar ist.

15. Kraftfahrzeug mit einer Sitzeinrichtung nach einem der Ansprüche 11 bis 14.
